Europäisches Patentamt

(19) European Patent Office

Office européen des brevets

(11) Publication number: **0 183 120 B1**

## (12) EUROPEAN PATENT SPECIFICATION

(45) Date of publication of patent specification: **06.03.91**    (51) Int. Cl.⁵: **G11B 5/66**

(21) Application number: **85114327.1**

(22) Date of filing: **11.11.85**

(54) Magnetic recording member.

(30) Priority: **14.11.84 JP 238627/84**

(43) Date of publication of application:
**04.06.86 Bulletin 86/23**

(45) Publication of the grant of the patent:
**06.03.91 Bulletin 91/10**

(84) Designated Contracting States:
**DE FR GB IT NL**

(56) References cited:
**DE-A- 3 335 165**
**FR-A- 2 474 737**

**IBM TECHNICAL DISCLOSURE BULLETIN, vol. 21, no. 10, March 1979; K.Y. AHN et al.: "Hard magnetic films for magnetic recording"**

**PATENT ABSTRACTS OF JAPAN, vol. 8, no. 275 (P-321)[1712], 15th December 1984; & JP - A - 59 142 738 (NIPPON DENKI K.K.) 16-08-1984**

**IEEE TRANSACTIONS ON MAGNETICS, vol. MAG-17, no. 6, November 1981, New York, US; W.T. MALONEY:"The optimization of sputtered Co-Cr layered medium for maximum areal density"**

(73) Proprietor: **NIHON SHINKU GIJUTSU KABUSHIKI KAISHA**
**2500, Hagizono**
**Chigasaki-shi Kanagawa-ken(JP)**

(72) Inventor: **Nakamura, Kyuzo**
**No. 672-20, Yachimata Ho Yachimata-machi**
**Inba-gun Chiba-ken(JP)**
Inventor: **Ota, Yoshifumi**
**No. 129, Yachimata Ni Yachimata-machi**
**Inba-gun Chiba-ken(JP)**
Inventor: **Yamada, Taiki**
**No. 617-2, Aza Umenosato Asahi Yachimata-machi**
**Inba-gun Chiba-ken(JP)**
Inventor: **Ishikawa, Michio**
**No. 617-2, Aza Umenosato Asahi Yachimata-machi**
**Inba-gun Chiba-ken(JP)**
Inventor: **Tani, Noriaki**
**No. 617-2, Aza Umenosato Asahi Yachimata-machi**
**Inba-gun Chiba-ken(JP)**

PATENT ABSTRACTS OF JAPAN, vol. 7, no. 13 (E-153)[1158], 19th January 1983; & JP - A - 57 170 505 (NIPPON GAKKI SEIZO K.K.) 20-10-1982

(74) Representative: **Körber, Wolfhart, Dr.rer.nat. et al**
**Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10 W-8000 München 22(DE)**

**Description**

This invention relates to a magnetic recording member of the type that a magnetic metallic film is formed on a substrate, said member being suitable for a longitudinal recording type hard disk medium.

Hitherto, a metallic thin film type magnetic recording member has been noticed as a medium which is capable of high density recording, and putting thereof to practical use has been started. Among various types thereof, there is a magnetic recording member formed by such a process that, after a non-magnetic substrate is provided on its surface with a Cr film, a Co film is formed on the surface of the Cr film by a sputtering process or a vapor deposition process. This type of magnetic recording member offers a high magnetic coercive force in its longitudinal direction, and has been applied to a longitudinal recording type hard disk medium.

Additionally, recently, it has been known that the Co film constituting the magnetic film of the foregoing recording member is replaced with a Co-Ni film. The FR-A-2474737, the DE-A-3335165 and the Patent Abstracts of Japan volume 7, number 13 (JP-A57170505) shows magnetic recording members having a magnetic metallic film of a composition in a range which partly overlaps the claimed composition, but the known recording members have not a Cr film between the non-magnetic substrate and the magnetic metallic film.

The magnetic recording member of the type that a Co magnetic film is formed, through a Cr film, on a surface of a non-magnetic substrate as mentioned above is increased in its coercive force if the Cr film is increased in thickness. For obtaining the recording member which is 47747-63662 A/m in its coercive force, the thickness of the Cr film must be 400 - 800 nm causes such problems that consumption of a target is large, and that the productivity thereof is comparatively small Accordingly, it is desirable to obtain the product having 47747-63662 A/m even if the Cr film thickness is made smaller. In other words, it is desirable to produce a magnetic recording member having a coercive force which is higher than the foregoing value in a case where Cr film thickness thereof is made 400 - 800 nm.

Additionally, the magnetic recording member of which the magnetic film is a Co film is defective in being low in anticorrosive property.

For removing the foregoing defects, if the Co magnetic film of the magnetic recording member is replaced with a Co-Ni magnetic film, then can be obtained a magnetic recording member which has not only an improved coercive force, but also an improved anticorrosive property. Namely, there can be obtained a product having 55704A/m in coercive force with its Cr film thickness of 300 nm. It is, however, more desirable that, for obtaining the same coercive force, the Cr film thickness of a magnetic film can be made less than that, and it is also more desirable that the magnetic film thereof be made higher in its anticorrosive property than that.

This invention has for its object to provide a magnetic recording member meeting the foregoing desires.

Embodying examples of this invention will now be explained as follows:

Various Co-Cr magnetic films and Co-Cr-Ni magnetic films of various composition ratios are prepared by changing variously an addition amount of Cr in relation to Co and Co-Ni are formed on respective Cr films formed on respective surfaces of non-magnetic substrates so as to obtain various magnetic recording members, and these recording members are measured in regard to coercive force and anticorrosive property.

GENERAL EXPLANATION OF DRAWING

    Fig.1    is a diagram showing relations between a coercive force and a composition of a magnetic film of this application embodying example,

    Fig. 2   is a triangular diagram showing similar relations therebetween when the composition ratio thereof is varied,

    Fig. 3   is a diagram showing relations between a Cr film thickness and a coercive force, and

    Fig. 4   is a diagram showing relations between a component composition and an anticorrosive property of a magnetic film.

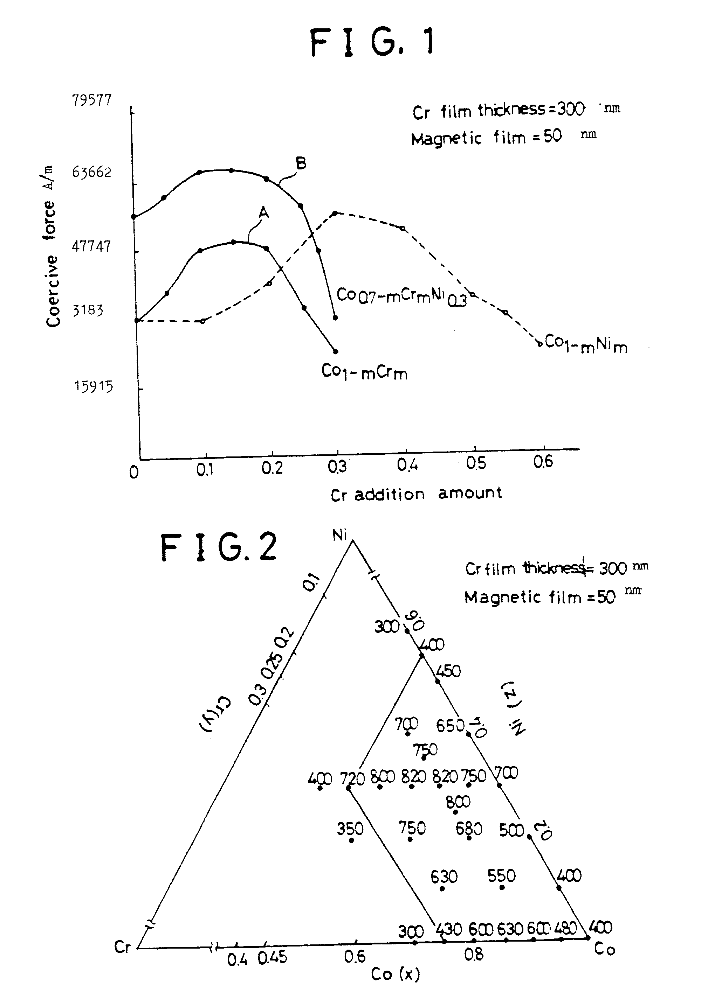

Figs. 1 and 2 show relations between coercive forces and composition ratios of the foregoing binary or ternary alloy components of the magnetic recording members each of which is 300 nm in Cr film thickness and 50 nm in Co-Cr or Co-Cr-Ni magnetic film thickness.

As shown by a curve A of the Co-Cr magnetic film and a curve B of the Co-Cr-Ni magnetic film in Fig. 1, it can be found that, in any case, the coercive force is increased, in comparison with that of the magnetic film of Co alone, until the addition amount of Cr is increased to about 25 at.%. Especially, in respect of the magnetic film of the ternary alloy of Co-Cr-Ni, there can be obtained one having the highest coercive force of 63662 A/m, with the addition amount m of about 15 at .%, and this value is higher than the highest coercive force of ,55704 A/m of a Co 0.7 Ni 0.3 magnetic film which offers the highest coercive force, among various conventional ones, as shown in the same Figure for comparison. Additionally, as shown in Fig. 1, the magnetic film of Co alone is 31831 A/m in its coercive force, but according to this application, as is clear from Fig. 2, the composition ratio of this invention Co-Cr or Co-Cr-Ni magnetic film which can have the coercive force higher than 31831 A/m has such a range that the same is represented by $Co_x$ $Cr_y$ $Ni_z$, where the composition thereof is $0.45 \leq x < 1.0$, $0 < y \leq 0.25$, and $x + y + z = 1$. The optimum composition ratio thereof is near Co 0.60 Cr 0.10 Ni 0.30.

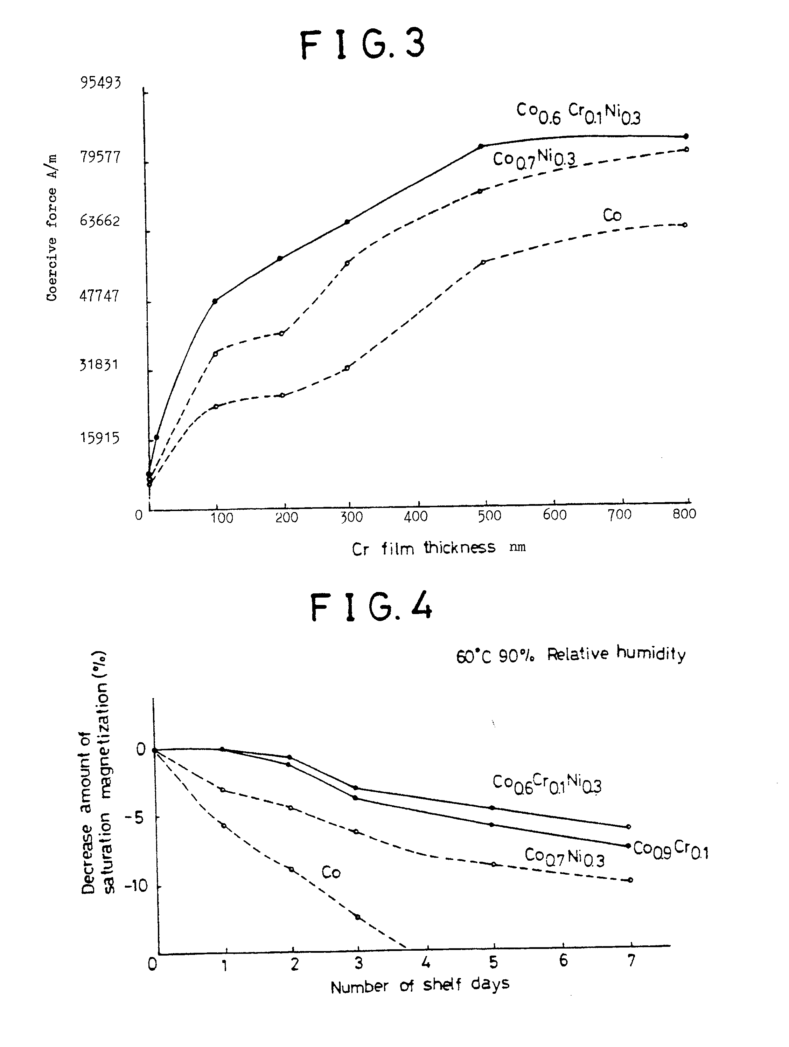

Fig. 3 shows relations between the coercive force and the Cr film thickness formed on the non-magnetic substrate, in respect of the Co 0.60 Cr 0.10 Ni 0.30 magnetic film of this invention, together with a Co 0.7 Ni 0.3 magnetic film and a magnetic film of Co alone for comparison. As will be clear therefrom, for obtaining the same coercive force of 55704 A/m for instance, the Cr film thickness of 500 nm is required in the case of the Co magnetic film, and the Cr film thickness of 300 nm is required in the case of the Co-Ni magnetic film, whereas the Cr film thickness of 200 nm which is comparatively small thickness surfaces in the case of this invention Co-Cr-Ni magnetic film. Additionally, in the case of this invention Co-Cr-Hi magnetic film, a product which is improved in its coercive force can be obtained, regardless of change in the Cr film and thickness, and at any point of varied film thickness thereof as compared with the case of the Co-Ni magnetic film and the case of the Co magnetic film.

The Co-Cr magnetic film and the Co-Cr-Ni magnetic film were measured, together with the magnetic film of Co alone and the Co-Ni magnetic film, in respect of anticorrosive properties thereof to obtain the results as shown in Fig. 4.

The anticorrosive property test was carried out under conditions of a constant temperature of 60° C and a constant moisture conditions of 90%, and the property was valued by a decrease in saturated magnetization.

As will be clear therefrom, the magnetic film is extremely increased in its anticorrosive property.

At the time of production of the magnetic film, a minor amount of another element may be added thereto. Additionally, the magnetic film thus produced may be applied, on its upper surface, with any desired protection film of organic or inorganic material of abrasion resisting property of anticorrosive property.

As for a process for producing the invention magnetic recording member, the Cr film to be formed on the non-magnetic substrate may be formed by a sputtering process, a vapor deposition process or the like, and the Co-Cr magnetic film or the Co-Cr-Ni magnetic film to be formed on the upper surface of the foregoing Cr film may be formed similarly by a sputtering process or a vapor deposition process but, because Cr, Co and Ni are different one from another in vapor pressure, a sputtering process is preferable and facilitates the production thereof. It is preferable that the time until the magnetic film is formed after the Cr film is formed is as shortest as possible.

The producing condition of the magnetic recording member by a DC magnetron sputtering process is, for instance, as follows:

The substrate is a slide glass plate, the substrate temperature is a room temperature, the reached vacuum degree is 1,066 Pa or below the same, the Ar pressure during sputtering is 1,3333 Pa, the magnetic film thickness is 50 nm, the Cr film deposition rate is 100 nm/min, the magnetic film deposition rate is 50nm/min, the distance between the target and the substrate is 100 mm and the change of the composition of Co, Cr, Ni of the magnetic film is obtained by that the sputtering is effected under the condition that a chip of Cr or Ni is placed on a Co target. The composition analysis of the produced magnetic film is carried out by a fluorescent X-ray process.

Thus, in a magnetic recording member of the type that a magnetic metallic film is formed, through a Cr film, on a non-magnetic substrate, the magnetic film is prepared into one presented by $Co_x$ $Cr_y$ $Ni_z$, and having such a composition ratio thereof in atomic ratio that is $0.45 \leq x < 1.0$, $0 < y \leq 0.25$ and $x + y + z = 1$, so that the coercive force thereof can be extremely improved, and in the case of producing a magnetic recording member having its coercive force substantially equal to that of the conventional Co or Co-Ni magnetic film, the Cr film thereof can be remarkably decreased in thickness, and consequently the consumption of amount of the target can be decreased and the productivity thereof can be improved, and additionally there can be obtained a magnetic recording member which is remarkably improved in anticorrosive property as compared with the conventional examples.

## Claims

1. A magnetic recording member containing a non-magnetic substrate and a magnetic metallic film comprising Co, Cr and Ni, characterized in that the magnetic metallic film is one represented by $Co_x$ $Cr_y$ $Ni_z$ having the composition $0.45 \leq x < 1.0$, $0 < y \leq 0.25$ and $x + y + z = 1$, and between the non-magnetic substrate and the magnetic metallic film is a Cr film.

2. A magnetic recording member as claimed in claim 1, wherein the magnetic metallic film is Co 0.60, Cr 0.10, Ni 0.30.

**Revendications**

1. Support d'enregistrement magnétique contenant un substrat non magnétique et un film métallique magnétique comprenant Co, Cr et Ni, caractérisé en ce que le film métallique magnétique est un film représenté par $Co_x Cr_y Ni_z$ ayant la composition : $0.45 \leq x < 1.0$, $0 < y \leq 0.25$ et $x + y + z = 1$, et en ce qu'entre le substrat non magnétique et le film métallique magnétique, il y a un film de Cr.

2. Support d'enregistrement magnétique selon la revendication 1, dans lequel le film métallique magnétique est Co = 0,60; Cr = 0,10; Ni = 0,30.

**Ansprüche**

1. Ein magnetisches Aufzeichnungselement, das ein nicht-magnetisches Substrat und einen magnetischen metallischen Film umfaßt, der Co, Cr und Ni enthalt, dadurch gekennzeichnet, daß der magnetische metallische Film ein durch $Co_x Cr_y Ni_z$ mit einer Zusammensetzung von $0.45 \leq x < 1.0$, $0 < y \leq 0.25$ und $x + y + z = 1$ dargestellter Film und zwischen dem nicht-magnetischen und dem magnetischen metallischen Film ein Cr-Film angeordnet ist.

2. Ein magnetisches Aufzeichnungselement nach Anspruch 1, in welchem der magnetische metallische Film Co 0,60, Cr 0,10 und Ni 0,30 ist.

# F I G. 1

Coercive force A/m vs Cr addition amount

Cr film thickness = 300 nm
Magnetic film = 50 nm

Curves: B, A, $Co_{0.7-m}Cr_m Ni_{0.3}$, $Co_{1-m}Cr_m$, $Co_{1-m}Ni_m$

Y-axis values: 79577, 63662, 47747, 3183, 15915
X-axis values: 0, 0.1, 0.2, 0.3, 0.4, 0.5, 0.6

# F I G. 2

Cr film thickness = 300 nm
Magnetic film = 50 nm

Ternary diagram Cr(y), Ni(z), Co(x)

# F I G. 3

Coercive force A/m

$Co_{0.6}\,Cr_{0.1}\,Ni_{0.3}$

$Co_{0.7}Ni_{0.3}$

Co

Cr film thickness  nm

# F I G. 4

60°C 90%  Relative humidity

Decrease amount of saturation magnetization (%)

$Co_{0.6}Cr_{0.1}Ni_{0.3}$

$Co_{0.7}Ni_{0.3}$

$Co_{0.9}Cr_{0.1}$

Co

Number of shelf days

7